**Europäisches Patentamt**

**European Patent Office**

**Office européen des brevets**

(19)

(11) Publication number: **0 044 825**
A2

(12) **EUROPEAN PATENT APPLICATION**

(21) Application number: **81850126.4**

(22) Date of filing: **20.07.81**

(51) Int. Cl.³: **B 23 Q 11/00**

(30) Priority: **21.07.80 US 170624**

(43) Date of publication of application:
**27.01.82 Bulletin 82/4**

(84) Designated Contracting States:
**DE FR GB IT SE**

(71) Applicant: **SANDVIK AKTIEBOLAG**

**S-811 81 Sandviken 1(SE)**

(72) Inventor: **Bergin, Kenneth M.**
**312, S, Revena Blvd**
**Ann Anbor Mich. 48103(US)**

(74) Representative: **Forsberg, Lars-Ake et al,**
**Sandvik AB Patents and Licences**
**S-811 81 Sandviken(SE)**

(54) **Balancing means for a rotating tool.**

(57) A cross feed cutting head for a rotating spindle includes a cutter assembly, driven to reciprocate as the head is rotated, and a balancing mechanism to compensate for the shifting mass of the cutter assembly. The balancing mechanism includes a plurality of annular races distributed along the radial periphery of the head. A plurality of counterweights are freely moveable in the races, and change position in the races to minimize static and dynamic imbalance caused by the reciprocation of the cutter assembly.

FIG. 1

EP 0 044 825 A2

# Balancing means for a rotating tool

The present invention relates to a cross feed head adapted for connection to a rotating spindle having an axis of rotation, wherein the cross feed head comprises a tool body rotated by the spindle, a cutter assembly extending away from the spindle, and actuating means for driving the cutter assembly in reciprocating motion with respect to the tool body in at least a radial direction as the cross feed head is rotated. The invention further relates to a balancing mechanism adapted to be used in connection with the cross feed head.

Cross feed heads of the above type, also known as feed-out-heads or facing heads, are usually used for facing operations or for grooving the interior surface of a bore of a stationary part.

Because the location of the center of mass of such tools varies, the tools are subject to vibration which may damage the driving machinery or tool and which may interfere with the machining operation.

It is known in the prior art to attempt to statically balance a cross feed head by selectively trimming mass from the tool body. Such balancing cannot, of course, compensate for the driven movements of the cutter assembly which periodically change the location of the center of mass of the tool.

Moreover, such a balancing operation is time-consuming and requires that surplus mass be available in the tool body to be trimmed.

It has previously been proposed to balance a cross feed head with an annular raceway containing moveable counterweights. Such balancing devices are disclosed in U.S. patents nos.

1967163, 3731556, 3799619 and 3913980. These patents disclose balancing devices employing a mass which is freely
moveable along a single circular path concentric with the
axis of rotation of the device.

U.S. patent no. 3,970,269 shows a balancing device where
moveable masses are provided along as many as two circular
paths on either side of a bobbin rotatably mounted at either
end by bearings. In contrast, because the moving cutter
assembly of the cross feed head must extend from the spindle
into contact the part to be machined, it is not practical to
mount the tool with bearings at either end or to locating
balancing devices on either side of the cutter assembly.

None of the devices shown in the aforementioned patents
are directed to the balancing of a machine tool having an
element driven in reciprocating motion, and hence do not
relate to the balancing of a tool having a large, varying
imbalance caused by a periodically moving center of mass.

The object of the present invention is to provide a balancing device for a rotating tool for compensating large
variations in the static and dynamic balance of the tool

This and other objects and features of the invention will
become apparent from the claims and from the following description when read in conjunction with the accompanying
drawings.

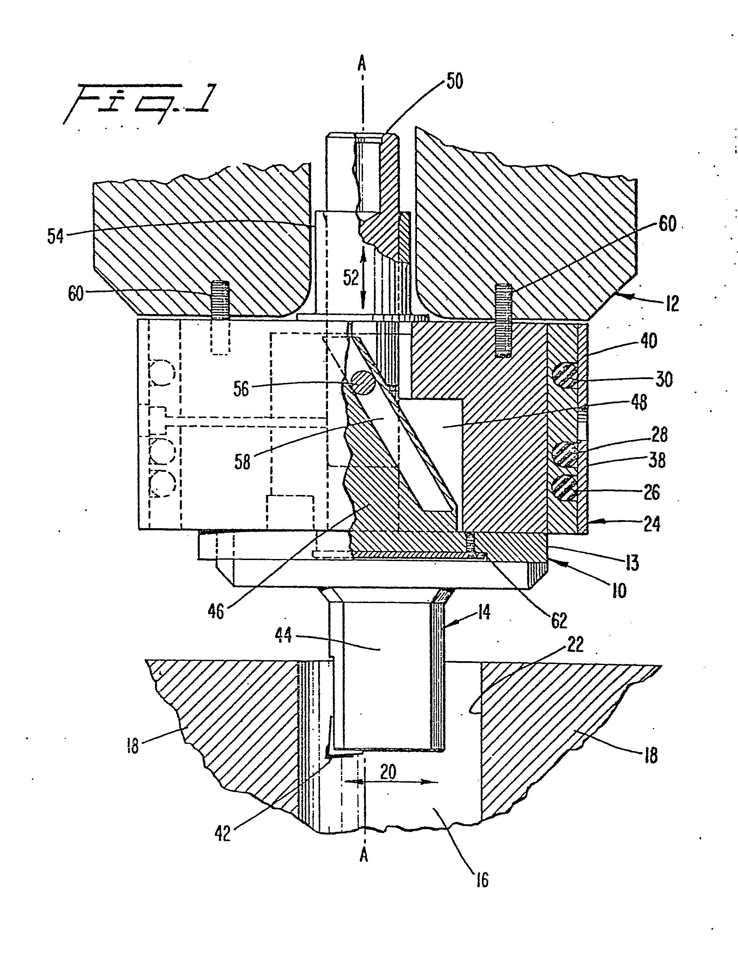

In the drawings, Fig. 1 is a side view in partial cross-
section of a cross feed head, including a balancing mechanism, of an embodiment of the present invention.

Fig. 2 is a schematic example of the locations of the mass
centers of the cross feed head of Fig. 1 along its axis of
rotation.

Fig. 3 is a schematic example of the angular distribution
of the mass centers of Fig. 2 around the axis of rotation
of the cross feed head.

The present invention relates generally to a balancing mechanism for a rotating tool. Such a tool may be of a type
having an element driven to move with respect to the axis
of rotation of the tool. The balancing mechanism may include at least two annular races. Advantageously, the axes of
the races are oriented to be coaxial with the axis of rotation of the tool. The annular races may be spaced from one
another along the axis of rotation of the tool. Each of the
races may carry at least one counterweight, the counterweights being substantially freely moveable along the races
in a circular path. The counterweights are adapted to distribute themselves in their respective races to minimize static imbalance of the tool and minimize dynamic imbalance in
the tool as the tool element is driven to move with respect
to the axis of rotation of the tool.

Specifically the balanced tool is a cross feed head for a
rotating spindle. The device may include a tool body and
cutter assembly which overhangs the spindle. An actuating
means, within the tool body, may be provided for driving
the cutter assembly in a reciprocating motion in at least
a radial direction as the cross feed head is rotated. A
plurality of annular races, coaxial with the axis of rotation of the tool body, are spaced along the radial periphery
of the tool body. A plurality of counterweights, substantially freely moveable along the races, are provided to minimize static and dynamic imbalances of the cross feed head
as the cutter assembly is radially reciprocated.

In a preferred embodiment of the present invention, the
plurality of counterweights are aplurality of freely rolling
metal balls. The number of metal balls disposed in each annular race is selected to minimize static and dynamic imbalance of the cross feed head. The metal balls may be retained in their respective annular races by at least one cylindrical shell located about the periphery of the tool body.

Referring first to Fig. 1, a cross feed head, including a balancing mechanism, is denoted generally by the numeral 10. The cross feed head is depicted as mounted on a spindle 12. The cross feed head may include an overhanging cutter assembly 14, which is shown protruding into a bore 16 of a work piece 18.

The cross feed head is rotated by the spindle 12 about an axis designated by the line A-A. Simultaneously, with the rotation, the cutter assembly 14 may be radially reciprocated in the directions indicated by the double-headed arrow 20. When inserted in the bore 16 of the work piece 18, the cross feed head may be used to groove or face interior surfaces 22 of the bore.

A balancing mechanism 24, constructed in accordance with the teachings of the present invention, may be disposed on the outer periphery of the tool body 13 of the cross feed head. The balancing mechanism may include three annular races or grooves 26, 28 and 30, machined into the tool body 13. Disposed within the grooves are freely moveable counterweights 32, 34 and 36. In a preferred embodiment, these counterweights may be a plurality of ball bearings. The counterweights are retained within their annular races by shells 38 and 40.

The construction of the cutter assembly and tool body will now be discussed in greater detail. The cutter assembly 14 may include a cutting edge 42 and a cutter body 44. The cutter assembly 14 may be one of a number of interchangeable assemblies which may be attached to an actuating tongue 46 within the tool body 13. The tool body 13, itself, is formed with a partially hollow interior 48 which contains the actuating mechanism for reciprocating the cutter assembly. The actuating mechanism may include the tongue 46 and a drawbar 50 which is driven to reciprocate in the axial directions indicated by double-headed arrow 52. The drawbar 50 is slideably moveable within a pilot 54 for locating the tool on the spindle 12. A key 56 on the drawbar may slidably engage a diagonal keyway 58 formed in the tongue 46. It will be readily understood that axial motion of the drawbar 50, will induce the radial motion of the tongue 46 as the key 50 slides along the keyway 58.

Prior to use, the cross feed head is assembled and balanced. First the tool body 13 may be attached to the spindle 12, for example, by means of threaded fasteners 60. A suitable machining assembly such as the cutter assembly 14 may be attached to the tongue 46 by means of threaded fastener 62. The device may then be balanced by adding a suitable number of ball bearings to the annular races 26, 28 and 30. The ball bearings may be added while one or more of shells 38 and 40 are removed.

In operation, the spindle 12 and cross feed head 10 rotate while the cutter assembly 14 is driven to reciprocating radial motion by means of the drawbar 50. The moveable counterweights 32, 34 and 36 will assume positions in their respective races to minimize static and dynamic imbalance in the tool as the cutter assembly 14 is reciprocated.

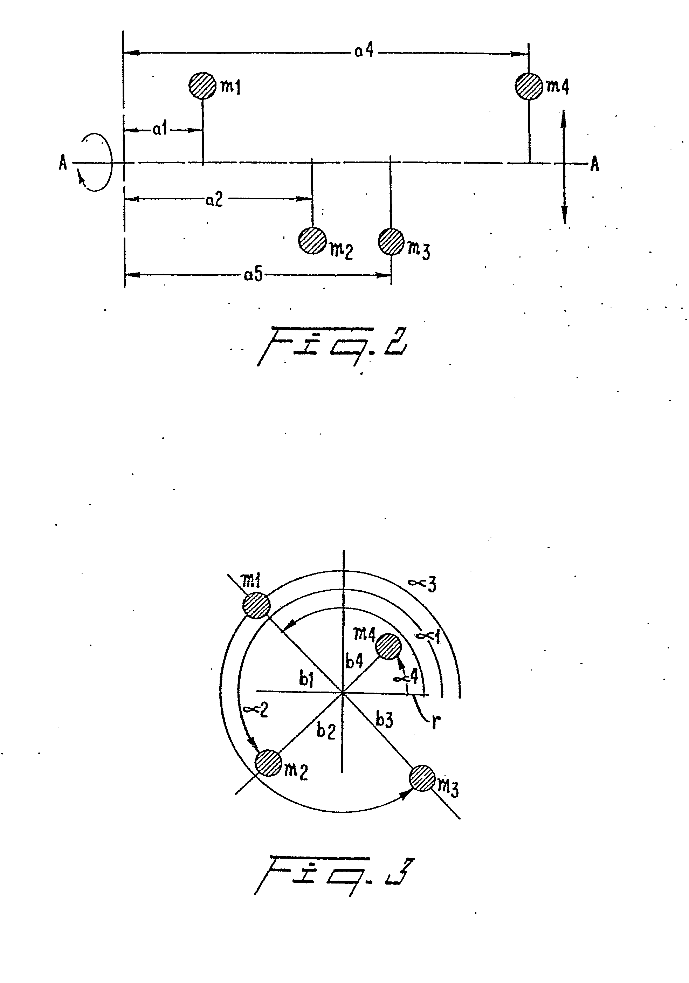

Referring now to Figs.2 and 3, the operation of the embodiment of the invention shown in Fig. 1 will be further discussed. In Fig. 2, the axis of rotation of the cross feed head (which coincides with the axis of the annular races 26, 28 and 30) is denoted by line A-A. The center of mass of the counterweights in the race 30 is approcimated by mass $m_1$, located at distance $a_1$, from the spindle. Similarly, the centers of mass of the counterweights in the races 28 and 26 are approximated by masses $m_2$ and $m_3$ located at distances $a_2$ and $a_3$ from the spindle, respectively. Finally, the center of mass of the reciprocating cutter assembly is approcimated by mass $m_4$ located at distance $a_4$ from the spindle.

Fig. 3 shows the angular distribution of the mass centers $m_1$-$m_4$ in a plane perpendicular to the axis of rotation of the cross feed head. Mass centers $m_1$ through $m_4$ are located at angles $\alpha_1$ through $\alpha_4$, respectively, from a common reference line r. The radial distances of mass centers $m_1$ through $m_4$ from the axis of rotation are indicated by the lines $b_1$ through $b_4$, respectively.

The conditions for static and dynamic balance for a four mass system, such as shown in Figs. 2-3 are given by the following equations:

$$(1) \qquad \sum_1^4 m_i b_i \sin \alpha_i = 0$$

$$(2) \qquad \sum_1^4 m_i b_i \cos \alpha_i = 0$$

$$(3) \qquad \sum_1^4 m_i b_i a_i \sin \alpha_i = 0$$

$$(4) \qquad \sum_1^4 m_i b_i a_i \cos \alpha_i = 0$$

These equations may be found in the book <u>Dubbels Taschen-</u><u>buch für den Maschinenbau</u> by Sass et al, page 259 (Springer-Verlag, 1963). In the book the equations are presented in discussing the effect of masses at different fixed locations in a rotating machine. The book does not suggest the case where the angular positions $\alpha_1$ through $\alpha_4$ of the mass centers of the tool are continously varying as they may do in the operation of the instant embodiment of the present invention.

The construction of the cross feed head imposes the overhang requirements, i.e. the mass center $m_4$ of the cutter assembly will be located further from the spindle than the counterweights. In operation, the distance $b_4$ of the mass center of the cutter assembly will vary as the tool rotates. It can be demonstrated that under such circumstances the conditions of static and dynamic balance cannot be achieved with fewer than two races of fixed postion and diameter.

According to the teachings of the present invention the movement ot the counterweights will tend to satisfy the equations set out above, i.e., the mass centers $m_1$ through $m_3$ of the counterweights will redistribute themselves at varying angles $\alpha_1$ through $\alpha_3$ in response to movement of the mass center $m_4$ of the cutter assembly. This movement of the counterweights will tend to minimize the static and dynamic imbalances of the cross feed head at any given instant.

The principles, preferred embodiments and modes of operation of the present invention have been described in the foregoing specification. The invention which is intended to be protected, however, is not to be construed as limited to the particular forms disclosed, since these are to be regarded as illustrative rather than restrictive. Variations and changes may be made without departing from the spirit

8

of the invention.

Claims

1. A cross feed head adapted for connection to a rotating spindle having an axis of rotation, said cross feed head comprising a tool body (13) rotated by the spindle (12), a cutter assembly (14) extending away from the spindle (12), actuating means (46, 50) for driving said cutter assembly in reciprocating motion with respect to said tool body in at least a radial direction as the cross feed head (10) is rotated, c h a r a c t e r i z e d in that the cross feed head (10) comprises a plurality of annular races (26, 28, 30) which are coaxial with the axis of rotation (A-A) and spaced along the axis, and a plurality of counterweights (32, 34, 36) which are substantially freely moveable along said races to minimize static and dynamic imbalance of the cross feed head (10) as the cutter assembly (14) is reciprocated.

2. A cross feed head according to claim 1, wherein said annular races (26, 28, 30) are at least three in number.

3. A cross feed head according to claim 1 or 2, wherein said plurality of counterweights are a plurality of freely rolling metal balls (32, 34, 36), said plurality of races are three annular grooves (26, 28, 30) spaced along the radial periphery of the tool body (13), and at least one metal ball (32, 34, 36) is disposed in each groove.

4. A cross feed head according to claim 3, wherein the number of metal balls (32, 34, 36) disposed in each groove (26, 28, 30) is selected to minimize static and dynamic imbalance of the cross feed head (10) as the cutter assembly (14) is radially reciprocated.

5. A cross feed head according to claim 3 or 4, wherein the metal balls (32, 34, 36) are retained in their respective grooves by at least one removeable cylindrical shell (38, 40)

10

for said tool body.

6. A cross feed head according to any of the preceding
claims, comprising chuch engagement means for attachment
of the cross feed head (10) to the rotating spindle (12).

7. A cross feed head according to claim 6, wherein a cutting
edge (42) of said cutter assembly protrudes from said tool
body (13) and wherein said annular races (26, 28, 30) are
spaced along the axis of rotation between said spindle (12)
and said cutting edge (42).

8. A cross feed head according to any of the preceding
claims, wherein said actuating means includes a tongue (46)
having a diagonal keyway (58) formed therein, and an axial
drawbar (50) and key (56) for interfitting with said keyway to convert driven axial motion into reciprocating
radial motion.

9. A cross feed head according to claim 8, wherein said
cutter assembly (14) is detachably connected to said tongue
(46).

10. A balancing mechanism for a rotating tool having an
element (46) operatively connected thereto and driven to
move with respect to the axis of rotation (A-A) of the
rotating tool (14), c h a r a c t e r i z e d  by at least
two annular races (26, 28), coaxial with the axis of rotation
(A-A) of the tool (14) and spaced from one another along
the axis of rotation of the tool, and at least one counterweight (32, 34) in each of said races, said counterweights
being substantially freely moveable along said races to
minimize static and dynamic imbalance in the tool (14) as
the element (46) is driven to move with respect to the
axis of rotation of the tool.

Fig.1

Fig. 2

Fig. 3